# EUROPEAN PATENT SPECIFICATION

(11) **EP 3 499 135 B1**
(45) Date of publication and mention of the grant of the patent: **03.07.2024**
(21) Application number: 18212165.7
(22) Date of filing: 13.12.2018
(51) Int. Cl.: F24D 3/14, E04B 1/08, F24S 20/67, F24S 20/66, F24D 3/12, F24S 10/75, F24S 20/00

(54) **MODULAR STRUCTURE FOR THE CONSTRUCTION OF BUILDINGS**
MODULARE STRUKTUR ZUR KONSTRUKTION VON GEBÄUDEN
STRUCTURE MODULAIRE POUR LA CONSTRUCTION DE BÂTIMENTS

(30) Priority: 15.12.2017 ES 201731414
(43) Date of publication of application: 19.06.2019
(73) Proprietor: Proyectopía, S.L., 36002 Pontevedra (ES)
(72) Inventor: HERMO SÁNCHEZ, Victor, 36002 Pontevedra (ES)
(74) Representative: Ungria López, Javier

(56) References cited:
- WO-A1-2005/068914
- WO-A1-2012/126524
- CN-A- 106 930 413
- US-A- 5 979 136

## Description

### Object of the invention

The present invention relates to a modular structure for the construction of buildings comprising metal panels that are joined together by pairs of adjacent sides by means of joining systems, wherein said modular structure integrates the load-bearing and coating function of the dwelling, thermal collection and redistribution. Therefore, the modular structures allows for the quick and practical assembly of vertical facings for facades and roofing facings for covers; wherein various modular structures form part of a building, such as for example a dwelling.

### Technical field

The present invention pertains to the technical field of the construction of lightweight modular buildings. More specifically, construction based on load-bearing metal panels made up of flat aluminium or steel sections that also fulfil the coating function.

### Technical problem to be solved and background of the invention

The sector of modular constructions is currently growing. Greater industrialisation is pursued through workshop implementation with guarantees and onsite assembly by means of simple operations and hardly any auxiliary means. New modular systems formed by flat parts that enable greater freedom in design and at the same time facilitate transportation follow the construction of three-dimensional cells or of the container type.

The light weight of these flat parts for construction, as well as the ease of transporting thereof, are factors that allow for internationalisation, which constitutes another relevant objective for modular constructive systems.

The lightweight modular constructive methods that are currently developed are usually based on the use of wood or steel. In the case of steel, those that are the most used are of the lightweight frame type.

In cases where lightweight panels that bring together the load-bearing and coating functions are used, these panels are usually made up of various materials resulting from the prior assembly of other components (structural frame and coating board). The constructive systems described in the utility model with publication no. ES 1 125 930 U, as well as in the patents with publication no. ES 2 458 917 B1, ES 2 012 604, ES 2 370 304 B1 belong to this construction group.

Some inventions explore the possibilities of aluminium or steel, but the use thereof is reduced to frame structures ("balloon frame" type), such as for example that which is described in the patents with publication no. ES 2 374 467 A1 and ES 2 451 166 A1.

In the case of aluminium or steel surface parts as a solution for the envelope, the structural function is usually not fulfilled at the same time, such that they are normally coating systems manufactured from sheet metal, as described for example in patents with publication no. ES 2 227 788 T3, ES 2 266 324 T3 and also in the utility model with publication no. ES 1 061 045 U.

In some cases, the aluminium panels are supported in a hidden auxiliary structure (patent ES 2 289 881 A). In other cases, they are separated into distinct elements, structures of linear elements and coating therebetween (utility model ES 1 059 558 U).

Furthermore, some inventions also exploit the excellent heat conductivity of aluminium such as collection and emission systems. There are non-load-bearing panels that enable heat energy to be transferred for the use thereof as an emitter (patent ES 2 436 031 B1) or as a collector in facades by means of non-load-bearing glazed systems (patent ES 2 471 218 T3).

On the other hand, it is worth noting that the efficiency of the construction from an ecological point of view is also an objective that is especially relevant to constructions such as dwellings for example; and the lightweight modular constructions of metal materials give rise to three significant problems: buckling, overheating due to sun exposure and the lack of thermal inertia.

Document WO 2012126524A1is related to a modular utility system for the interior of a room, said system comprising a plurality of modules extending in a longitudinal direction, configured to be mounted adjacent to each other, wherein each module comprises a central utility-providing portion (45), and a first and second side portion (46,47) on opposing sides of the central portion, the central and two side portions extending in said longitudinal direction, said first and second side portion comprising a first and second interconnection profile (5, 6), the first interconnection profile (5) of a module being configured to be attached to the second interconnection profile (6) of an adjacent module, so as to form a module assembly.

Document US 5979136A1 relates to a structural member having an elongated front panel with lateral ends. Side panels extend generally perpendicularly from the front panel at the lateral ends. Each of the side panels has a generally Z-shaped portion therein with a flange at the end of each side panel having a portion thereof extending in the same direction and generally parallel to the front panel. Each of the flanges have another portion generally parallel to the adjacent side panel, so that adjacent cooperating structural members are nestable with each other at the Z-shaped portions thereof with the flanges of nested side panels cooperating to form an interlocking construction. Reinforcing members are provided at the top and bottom of a plurality of nested structural panels, along with top and bottom plates.

### Description of the invention

With the aim of reaching the objectives and preventing the drawbacks mentioned in the preceding sections, the invention proposes a modular structure according to claim 1 for the construction of buildings comprising metal panels that include pairs of opposite sides; wherein the metal panels are secured to each other by means of joining systems located corresponding to said opposite sides.

Each joining system of the metal panels comprises an anchoring device integrated into the adjacent sides of the metal panels, and a fastening device that integrally joins the adjacent sides of the metal panels.

The anchoring device comprises a first male-female coupling and a second male-female coupling.

The first male-female coupling is formed by first male elements and first female elements that are located opposite to each other in edges of front plates of the metal panels; wherein said edges are located corresponding to the sides of the metal panels.

The second male-female coupling is formed by a second male element and a second female element, which are located on L-shaped protrusions forming part of the metal panels; wherein said L-shaped protrusions are located corresponding to the opposite sides of the metal panels.

The L-shaped protrusions comprise main sections and end sections; wherein the second male element and the second female element are located in said main sections of the L-shaped protrusions.

The main sections of the L-shaped protrusions of two adjacent metal panels support each other by two facing faces forming part of said adjacent main sections corresponding to two sides of the metal panels.

In a preferred embodiment of the invention, the modular structure includes a first sealing gasket and a second sealing gasket located on the same plane delimited between the main sections of the adjacent L-shaped protrusions of the metal panels; wherein the facing faces of the main sections of the L-shaped protrusions are separated by the thickness of the two sealing gaskets: the first gasket and second gasket.

The fastening device comprises nuts and bolts inserted into facing holes located in the main sections of the L-shaped protrusions.

The main sections of the L-shaped protrusions comprise end breaks creating channels adjacent to the second male element and second female element of the anchoring device.

The second male element and the second female element of the anchoring device comprise inclined planes that complement and are in contact with each other.

The modular structure of the invention comprises a system for channelling a fluid that is installed corresponding to the front plates of the metal panels.

The system for channelling the fluid comprises pairs of flanges integrated into the front plates of the metal panels; wherein said pairs of flanges delimit grooves in which tubes forming part of a network of pipes fit.

In a preferred embodiment of the invention, the system for channelling the fluid comprises a configuration of tubular ducts forming an integral part of the metal panels.

The modular structure of the invention enables modules of dwellings and other constructions of one or several heights to be executed using lightweight metal panels with simple assembly operations and hardly any auxiliary means.

These metal panels which have a thin cross section also enable great versatility of the plan design, as well as many possibilities for transport. By bringing together the structural and coating functions, they optimise the use of the material and ease of construction compared to systems based on linear frames (steel frame).

The three problems described previously (buckling, overheating due to sun exposure and lack of thermal inertia) of the lightweight metal modular constructions are solved by including the reinforcement flanges in the metal panels that prevent buckling and at the same time enable the inclusion of the network of pipes that irrigate the envelope surface formed by the succession of the metal panels that make up the modular structure of the invention.

Said network of pipes enables the temperature between all the facings (walls of different orientations and roofing) of the building to be balanced, regardless of the sunlit facings at any time of the day or season of the year.

The network of pipes also enables the fluid that circulates through the inside thereof to be taken advantage of in order to use or accumulate it to heat water which can be used as sanitary water and also for heating. Furthermore, the heat excess generated by the modular structure of the invention can be centralised in an accumulation system to prevent overheating.

The manufacture of the structural and coating metal panels can be carried out by extrusion, without needing to assemble different pieces to successfully bring together the load-bearing and structural functions in one element.

For the purpose of helping to make this specification more readily understandable, a set of drawings constituting an integral part of the same has been included below, wherein by way of illustration and not limitation the object of the invention has been represented.

### Brief description of the figures

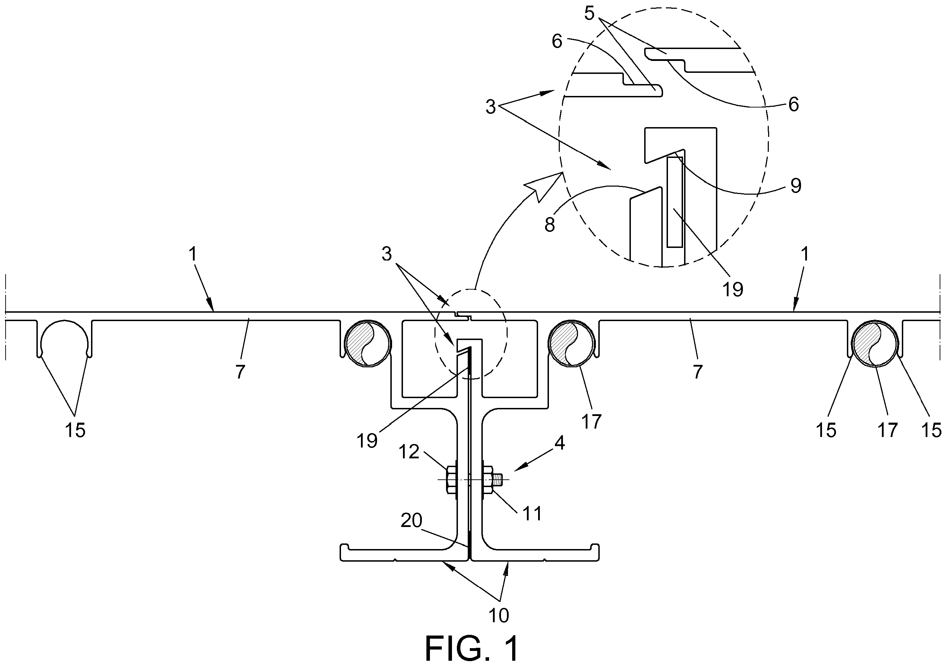

**Figure 1****.-** Show an elevation view of the modular structure for the construction of buildings, object of the invention.

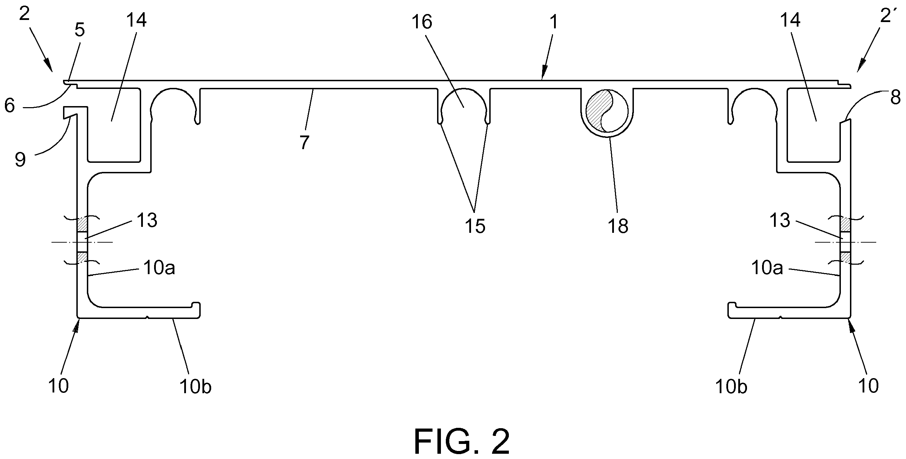

**Figure 2****.-** Show an elevation view of a metal panel forming part of the modular structure of the invention.

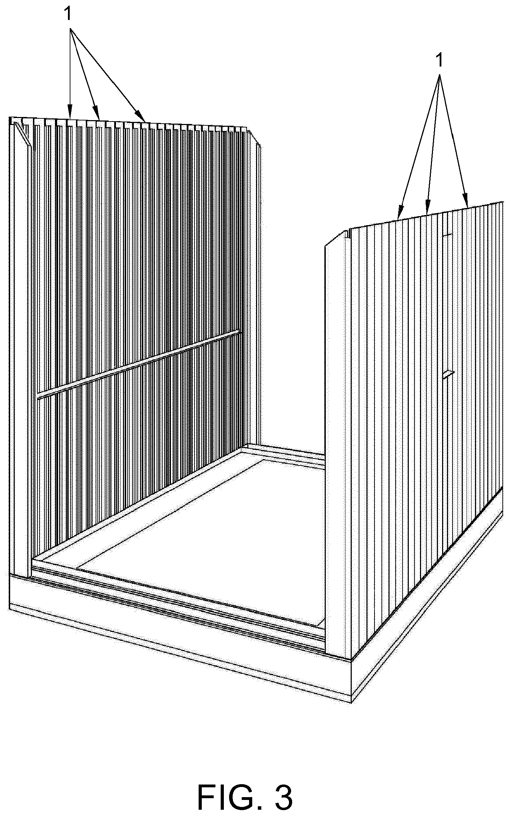

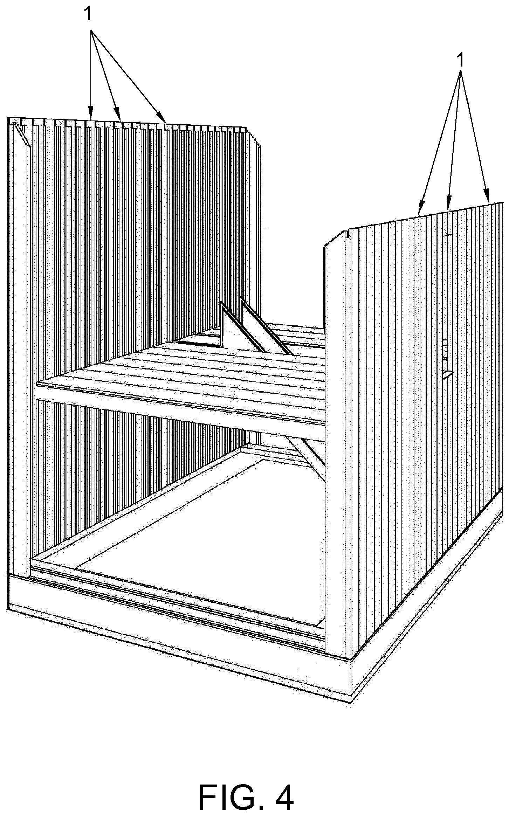

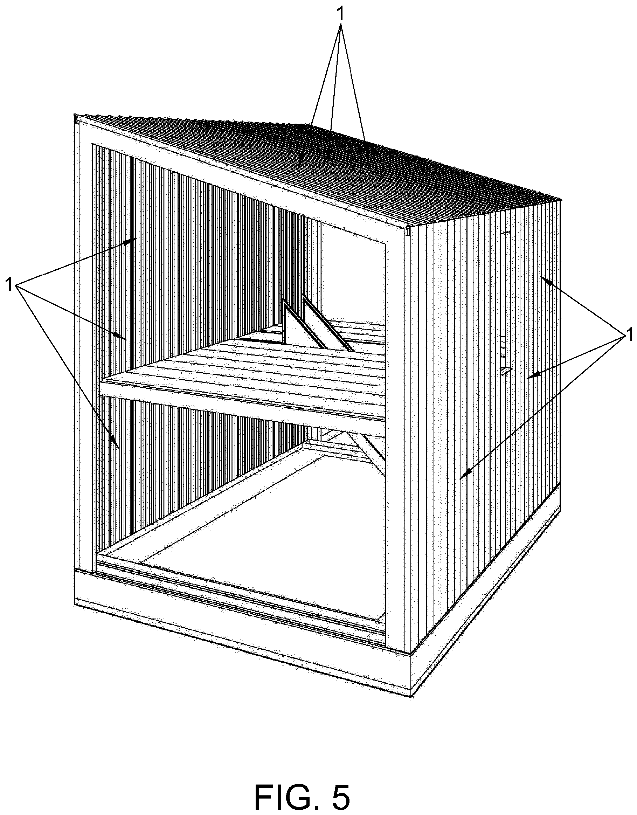

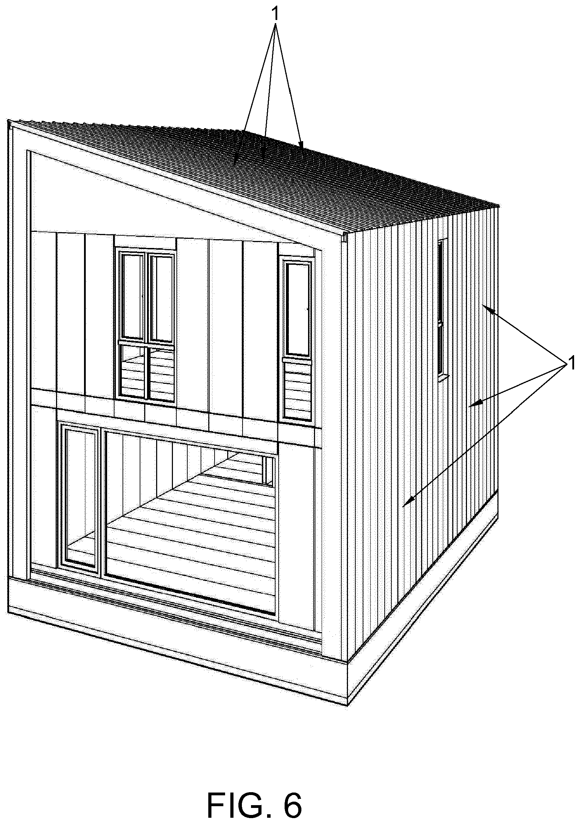

**Figures 3 to 6****.-** Show perspective views of the construction process of a building that includes several modular structures of the invention corresponding to facade wall facings and a roof facing of the building; where said figures basically show the application of the modular structure of the invention.

### Description of an exemplary embodiment of the invention

Following the numbering adopted in the figures, the structure modular for the construction of buildings comprises metal panels 1 that include opposite sides 2, 2'; wherein each pair of adjacent metal panels 1 are secured together by means of joining systems, each one of which comprises an anchoring device 3 integrated in the very adjacent sides 2, 2' of the metal panels 1, and a fastening device 4 that integrally joins the pairs of adjacent sides 2, 2' of the metal panels 1.

The anchoring device 3 comprises a first male-female coupling and a second male-female coupling.

The first male-female coupling is formed by first male elements 5 and first female elements 6 formed by stepped recesses; wherein the first male elements 5 and the first female elements 6 are oppositely located in edges of front plates 7 forming part of the metal panels 1 and wherein said edges are located corresponding to the opposite sides 2, 2' of the metal panels 1.

On the other hand, the second male-female coupling is formed by a second male element 8 and a second female element 9, which are located on L-shaped protrusions 10 forming part of the metal panels 1; wherein said L-shaped protrusions 10 are also located corresponding to the opposite sides 2, 2' of the metal panels 1.

Said L-shaped protrusions 10 comprise main sections 10a and end sections 10b; wherein the second male element 8 and the second female element 9 are located in said main sections 10a of the L-shaped protrusions 10; and wherein two main sections 10a of two adjacent metal panels 1 support each other by two facing faces that form part of the adjacent main sections 10a when two adjacent metal panels 1 are coupled.

On the other hand, in another embodiment of the invention, the modular structure of the invention includes a first sealing gasket 19 and a second sealing gasket 20 located on a same plane delimited between the main sections 10a of the adjacent L-shaped protrusions 10 of the metal panels 1, such that in this embodiment the facing faces of the main sections 10a of the L-shaped protrusions 10 are separated by the thickness of the two sealing gaskets: the first gasket 19 and second gasket 20.

The second male element 8 and the second female element 9 comprise inclined planes that complement each other and are in contact when two adjacent metal panels 1 are assembled. Said inclined planes help to secure the correct joining and positioning between adjacent metal panels 1.

The fastening device 4 comprises nuts 11 and bolts 12 that are inserted through facing holes 13 located in the main sections 10a of the L-shaped protrusions 10. In another embodiment not shown in the figures, the fastening device 4 could comprise, for example, rivets assembled in correspondence with the facing holes 13 located in the main sections 10a of the L-shaped protrusions 10.

On the other hand, in the embodiment shown in the figures, the main sections 10a of the L-shaped protrusions 10 comprise end breaks creating channels 14 adjacent to the second male element 8 and second female element 9.

The modular structure of the invention further comprises a system for channelling a fluid that enables a network of pipes to be installed so that a fluid flows therethrough, such as for example water, in order to take advantage of solar heat to heat sanitary water, water for heating or for other purposes. Said system for channelling a fluid is installed corresponding to the front plates 7 of the metal panels 1.

The system for channelling the fluid also has the function of preventing deformation (buckling), overheating due to sun exposure and the lack of thermal inertia due to the light weight of the modular structure of metal material.

According to the invention, the system for channelling the fluid comprises pairs of reinforcement flanges 15 integrated into the front plates 7 of the metal panels 1; wherein said pairs of flanges 15 delimit grooves 16 in which tubes 17 forming part of the network of pipes fit, and wherein said pairs of flanges 15 provide rigidity and sturdiness to the metal panels 1.

Additionally, the system for channelling the fluid, can comprise a configuration of tubular ducts 18 forming an integral part of the metal panels 1; wherein said tubular ducts 18 also provide rigidity and sturdiness to the metal panels 1.

The modular system of the invention, thanks to the use of a flat vertical module of a reduced size, accepts the free design of the building plan, at the same time that it resolves different areas and covers or roof facings with different inclinations.

The freedom of design for a building allows each plot to be adapted according to the relation between orientation, accesses and functionality, an important condition for obtaining results that can be considered as passive housing or housing with energy consumption close to zero.

The modular structures of metal panels 1 that make up the roof cover and the load-bearing facade with a thermal collector and redistribution system can be manufactured in aluminium by extrusion.

With regard to the previous paragraph, the conventional extruders enable the aluminium panel to be manufactured with sizes of approximately 300 millimetres, which makes the use thereof economically viable. Other extruders for manufacturing larger aluminium panels would be viable, provided that they maintain a proper ratio between the size and thickness of the panels.

The modular structure of the invention facilitates the transportation of a modular dwelling since it comprises flat parts (metal panels 1) that enable a package to be transported without losing volume, compared to other modular structures of three-dimensional cells.

The assembly starting with simple screw operations, together with the lightness thereof, also entails notable advantages in terms of safety, deadlines and quality of the construction.

Each metal panel 1 (made from aluminium, for example) for constructing buildings integrates the structural, covering, heat collection and redistribution functions, and can be manufactured from a single part by extrusion.

Each panel 1 comprises a C-shaped configuration providing rigidity. The sides 2, 2' of the metal panels, together with the joining system enable them to be assembled together between adjacent metal panels 1 providing the resulting modular structure of the invention with sealing and continuity in facades and covers.

The facade modular structure enables it to perform the function of the vertical load-bearing structure, facade and heat collector at the same time. The configuration of the modular structure enables the vertical joining to be formed therebetween, providing sealing against water on the facade. The system for channelling the fluid enables the energy to be redistributed by solar collection, use in hot sanitary water (HSW), heating, accumulation or cooling.

The system for channelling the fluid enables the fluid that irrigates the surface of the building including several modular structures of the invention to be directly stored. The configuration thereof enables the horizontal joining to be formed therebetween, providing sealing against water on the cover. The system for channelling the fluid (tubes 17, tubular ducts 18) enable the energy to be redistributed by solar collection, use in hot sanitary water (HSW), heating, accumulation or cooling.

In a dwelling, the modular structures configuring the vertical facings of the facade support and are fastened on lightweight foundations.

## Claims

1. **A modular structure for the construction of buildings,** which comprises metal panels (1) to make up load bearing facades and roof covers that include pairs of opposite sides (2, 2'); each metal panel (1) comprising a front plate (7) and a joining system located in each of the sides (2, 2'); wherein the metal panels (1) are secured to each other by coupling the joining systems located in opposite sides (2, 2') of two adjacent metal panels (1); wherein:
- each joining system of the metal panels (1) comprises an anchoring device (3) incorporated into the adjacent sides (2, 2') of the metal panels (1), and a fastening device (4) that integrally joins the adjacent sides (2, 2') of the metal panels (1);
- the anchoring device (3) comprises a first male-female coupling and a second male-female coupling;
- the first male-female coupling is formed by first male elements (5) and first female elements (6) that are located opposite to each other in edges of front plates (7) of the metal panels (1); wherein said edges are located in correspondence with the sides (2, 2') of the metal panels (1);
- the second male-female coupling is formed by a second male element (8) and a second female element (9), which (8, 9) are located on main sections (10a) of L-shaped protrusions (10) forming part of the metal panels (1); wherein said L-shaped protrusions (10) are located in correspondence with the opposite sides (2,2') of the metal panels (1);
the modular structure being **characterized in that**:
- the main sections (10a) of the L-shaped protrusions (10) comprise end breaks creating channels (14) adjacent to the second male element (8) and second female element (9) of the anchoring device (3),
- the modular structure comprises a system for channelling a fluid that is installed in the front plates (7) of the metal panels (1), that comprises pairs of flanges (15) integrated into the front plates (7), the pairs of flanges (15) delimiting grooves (16) in which tubes (17) forming part of a network of pipes fit,
so that:
- the first male-female coupling provides the modular structure with an outer finishing that is flat and continuous;
- the joining of the panels with a double male-female coupling, together with gaskets (19, 20), and the channels (14) provides the modular structure with sealing in facades and roofs;
- buckling, overheating due to sun exposure and lack of thermal inertia of the metal panel (1) are avoided in the modular structure by including the reinforcement flanges in the metal panels that enable the inclusion of a network of pipes that irrigate the envelope surface and the load-bearing and coating function of the dwelling, thermal collection and redistribution of the heat may be fulfilled in the modular structure.

2. **The modular structure for the construction of buildings,** according to claim 1, **characterised in that** the L-shaped protrusions (10) comprise main sections (10a) and end sections (10b); wherein the second male element (8) and the second female element (9) are located in said main sections (10a) of the L-shaped protrusions (10).

3. **The modular structure for the construction of buildings,** according to claim 2, **characterised in that** the main sections (10a) of the L-shaped protrusions (10) of two adjacent metal panels (1) support each other by two facing faces that form part of said adjacent main sections (10a) corresponding to two sides (2, 2') of the metal panels (1).

4. **The modular structure for the construction of buildings,** according to claim 2, **characterised in that** the gaskets (19, 20) are a first sealing gasket (19) and a second sealing gasket (20) located on a same plane delimited between the main sections (10a) of the adjacent L-shaped protrusions (10) of the metal panels (1); wherein the facing faces of the main sections (10a) of the L-shaped protrusions (10) are separated by the thickness of the two sealing gaskets: the first gasket (19) and second gasket (20).

5. **The modular structure for the construction of buildings,** according to any one of preceding claims 2 to 4, **characterised in that** the fastening device (4) comprises nuts (11) and bolts (12) inserted into facing holes (13) located in the main sections (10a) of the L-shaped protrusions (10).

6. **The modular structure for the construction of buildings,** according to any one of the preceding claims, **characterised in that** the second male element (8) and second female element (9) of the anchoring device (3) comprise complementary inclined planes and are in contact with each other.

7. **The modular structure for the construction of buildings,** according to any one of the preceding claims, **characterised in that** the system for channelling the fluid comprises a configuration of tubular ducts (18) forming an integral part of the metal panels (1).

## Patentansprüche

1. Modulare Struktur für den Bau von Gebäuden, die Metallpaneele (1) zum Bilden von tragenden Fassaden und Dacheindeckungen umfasst, die Paare von gegenüberliegenden Seiten (2, 2') umfassen; wobei jedes Metallpaneel (1) eine Frontplatte (7) und ein an jeder der Seiten (2, 2') angeordnetes Verbindungssystem umfasst; wobei die Metallpaneele (1) aneinander durch Koppeln der an gegenüberliegenden Seiten (2, 2') von zwei angrenzenden Metallpaneelen (1) angeordneten Verbindungssysteme befestigt werden; wobei:
- jedes Verbindungssystem der Metallpaneele (1) eine in den angrenzenden Seiten (2, 2') der Metallpaneele (1) integrierte Verankerungsvorrichtung (3) und eine Befestigungsvorrichtung (4), die integral die angrenzenden Seiten (2, 2') der Metallpaneele (1) verbindet, umfasst;
- die Verankerungsvorrichtung (3) eine erste Steck-/Aufnahmekupplung und eine zweite Steck-/Aufnahmekupplung umfasst;
- die erste Steck-/Aufnahmekupplung durch erste Steckelemente (5) und erste Aufnahmeelemente (6) gebildet wird, die einander gegenüberliegend an Rändern von Frontplatten (7) der Metallpaneele (1) angeordnet sind; wobei die Ränder in Übereinstimmung mit den Seiten (2, 2') der Metallpaneele (1) angeordnet sind;
- wobei die zweite Steck-/Aufnahmekupplung durch ein zweites Steckelement (8) und ein zweites Aufnahmeelement (9) gebildet wird, wobei (8, 9) auf Hauptabschnitten (10a) von L-förmigen Vorsprüngen (10, die einen Teil der Metallpaneele (1) bilden, angeordnet sind;
wobei die L-förmigen Vorsprünge (10) in Übereinstimmung mit den gegenüberliegenden Seiten (2, 2') der Metallpaneele (1) angeordnet sind;
wobei die modulare Struktur **dadurch gekennzeichnet ist, dass:**
- die Hauptabschnitte (10a) der L-förmigen Vorsprünge (10) Kanäle (14) erzeugende Endbrechpunkte angrenzend an das zweite Steckelement (8) und das zweite Aufnahmeelement (9) der Verankerungsvorrichtung (3) umfassen,
- die modulare Struktur ein System zum Kanalisieren eines Fluids umfasst, das in den Frontplatten (7) der Metallpaneele (1) installiert ist und das Paare von in die Frontplatten (7) integrierte Flansche (15) umfasst, wobei die Paare von Flanschen (15) Nuten (16) abgrenzen, in die Rohre (17) passen, die Teil eines Rohrleitungsnetzes bilden,
so dass:
- die erste Steck-/Aufnahmekupplung die modulare Struktur mit einer äußeren Oberfläche bereitstellt, die flach und durchgehend ist;
- das Verbinden der Paneele mit einer doppelten Steck-/Aufnahmekupplung zusammen mit Dichtungen (19, 20) und den Kanälen (14) die modulare Struktur mit einer Dichtung in Fassaden und Dächern bereitstellt;
- Beulenbildung, Überhitzung durch Sonneneinstrahlung und Fehlen von thermischer Trägheit des Metallpaneels (1) in der modularen Struktur dadurch vermieden werden, dass die Verstärkungsflansche in den Metallpaneele enthalten sind, die das Integrieren eines Netzes von Rohrleitungen, welche die Hüllenoberfläche benetzen, und die tragende und beschichtende Funktion des Verbleibens, des thermischen Sammelns und der Umverteilung der Wärme in der modularen Struktur erfüllt werden kann.

2. Modulare Struktur für den Bau von Gebäuden nach Anspruch 1, **dadurch gekennzeichnet, dass** die L-förmigen Vorsprünge (10) Hauptabschnitte (10a) und Endabschnitte (10b) umfassen, wobei das zweite Steckelement (8) und das zweite Aufnahmeelement (9) in den Hauptabschnitten (10a) der L-förmigen Vorsprünge (10) angeordnet sind.

3. Modulare Struktur für den Bau von Gebäuden nach Anspruch 2, **dadurch gekennzeichnet, dass** sich die Hauptabschnitte (10a) der L-förmigen Vorsprünge (10) von zwei angrenzenden Metallpaneelen (1) gegenseitig durch zwei zueinander zeigende Flächen stützen, die einen Teil der angrenzenden Hauptabschnitte (10a) entsprechend zwei Seiten (2, 2') der Metallpaneele (1) bilden.

4. Modulare Struktur für den Bau von Gebäuden nach Anspruch 2, **dadurch gekennzeichnet, dass** die Dichtungen (19, 20) eine erste Profildichtung (19) und eine zweite Profildichtung (20), angeordnet auf einer zwischen den Hauptabschnitten (10a) der angrenzenden L-förmigen Vorsprünge (10) der Metallpaneele (1) abgegrenzten gleichen Ebene, sind, wobei die zueinander zeigenden Flächen der Hauptabschnitte (10a) der L-förmigen Vorsprünge (10) durch die Stärke der zwei Profildichtungen, das heißt der ersten Dichtung (19) und der zweiten Dichtung (20), getrennt sind.

5. Modulare Struktur für den Bau von Gebäuden nach einem der vorhergehenden Ansprüche 2 bis 4, **dadurch gekennzeichnet, dass** die Befestigungsvorrichtung (4) Muttern (11) und Schrauben (12), eingeführt in zueinander zeigende Löcher (13), die in den Hauptabschnitten (10a) der L-förmigen Vorsprünge (10) angeordnet sind, umfasst.

6. Modulare Struktur für den Bau von Gebäuden nach einem der vorhergehenden Ansprüche, **dadurch gekennzeichnet, dass** das zweite Steckelement (8) und das zweite Aufnahmeelement (9) der Verankerungsvorrichtung (3) ergänzende schiefe Ebenen umfassen und in Kontakt miteinander stehen.

7. Modulare Struktur für den Bau von Gebäuden nach einem der vorhergehenden Ansprüche, **dadurch gekennzeichnet, dass** das System zum Kanalisieren des Fluids eine Konfiguration von Rohrkanälen (18) umfasst, die einen integralen Teil der Metallpaneele (1) bilden.

## Revendications

1. Structure modulaire pour la construction de bâtiments, qui comprend des panneaux métalliques (1) pour réaliser des façades de support de charge et des couvertures de toit qui comprennent des paires de côtés (2, 2') opposés ; chaque panneau métallique (1) comprenant une plaque avant (7) et un système d'assemblage positionné dans chacun des côtés (2, 2') ; dans laquelle les panneaux métalliques (1) sont fixés entre eux en couplant les systèmes d'assemblage positionnés dans les côtés (2, 2') opposés de deux panneaux métalliques (1) adjacents ; dans laquelle :
- chaque système d'assemblage des panneaux métalliques (1) comprend un dispositif d'ancrage (3) incorporé dans les côtés (2, 2') adjacents des panneaux métalliques (1), et un dispositif de fixation (4) qui assemble, de manière solidaire, les côtés (2, 2') adjacents des panneaux métalliques (1) ;
- le dispositif d'ancrage (3) comprend un premier couplage mâle-femelle et un deuxième couplage mâle-femelle ;
- le premier couplage mâle-femelle est formé par des premiers éléments mâles (5) et des premiers éléments femelles (6) qui sont positionnés à l'opposé les uns des autres dans les bords des plaques avant (7) des panneaux métalliques (1) ; dans laquelle lesdits bords sont positionnés en correspondance avec les côtés (2, 2') des panneaux métalliques (1) ;
- le deuxième couplage mâle-femelle est formé par un deuxième élément mâle (8) et un deuxième élément femelle (9), lesquels (8, 9) sont positionnés sur les sections principales (10a) des saillies en forme de L (10) faisant partie des panneaux métalliques (1) ; dans laquelle lesdites saillies en forme de L (10) sont positionnées en correspondance avec les côtés (2, 2') opposés des panneaux métalliques (1) ;
la structure modulaire étant **caractérisée en ce que** :
- les sections principales (10a) des saillies en forme de L (10) comprennent des canaux de création de ruptures d'extrémité (14) adjacents au deuxième élément mâle (8) et au deuxième élément femelle (9) du dispositif d'ancrage (3),
- la structure modulaire comprend un système pour acheminer un fluide qui est installé dans les plaques avant (7) des panneaux métalliques (1), qui comprend des paires de brides (15) intégrées dans les plaques avant (7), les paires de brides (15) délimitant des rainures (16), dans lesquelles sont montés des tubes (17) faisant partie d'un réseau de tuyaux,
de sorte que :
- le premier couplage mâle-femelle dote la structure modulaire d'une finition externe qui est plate et continue ;
- l'assemblage des panneaux avec un double couplage mâle-femelle, conjointement avec des joints (19, 20) et les canaux (14), dote la structure modulaire d'étanchéité dans les façades et les toits ;
- le gauchissement, la surchauffe dus à l'exposition au soleil et au manque d'inertie thermique du panneau métallique (1) sont évités dans la structure modulaire en incluant les brides de renforcement dans les panneaux métalliques qui permettent l'inclusion d'un réseau de tuyaux qui irriguent la surface d'enveloppe et la fonction de support de charge et de revêtement du logement, la collecte thermique et la redistribution de la chaleur peuvent être satisfaites dans la structure modulaire.

2. Structure modulaire pour la construction de bâtiments selon la revendication 1, **caractérisée en ce que** les saillies en forme de L (10) comprennent des sections principales (10a) et des sections d'extrémité (10b) ; dans laquelle le deuxième élément mâle (8) et le deuxième élément femelle (9) sont positionnés dans lesdites sections principales (10a) des saillies en forme de L (10).

3. Structure modulaire pour la construction de bâtiments selon la revendication 2, **caractérisée en ce que** les sections principales (10a) des saillies en forme de L (10) de deux panneaux métalliques (1) adjacents se supportent l'une par rapport à l'autre grâce à deux faces en vis-à-vis qui font partie desdites sections principales (10a) adjacentes correspondant aux deux côtés (2, 2') des panneaux métalliques (1).

4. Structure modulaire pour la construction de bâtiments selon la revendication 2, **caractérisée en ce que** les joints (19, 20) sont un premier joint d'étanchéité (19) et un deuxième joint d'étanchéité (20) positionnés sur un même plan délimité entre les sections principales (10a) des saillies en forme de L (10) adjacentes des panneaux métalliques (1) ; dans laquelle les faces en vis-à-vis des sections principales (10a) des saillies en forme de L (10) sont séparées par l'épaisseur des deux joints d'étanchéité : le premier joint (19) et le deuxième joint (20).

5. Structure modulaire pour la construction de bâtiments selon l'une quelconque des revendications 2 à 4, **caractérisée en ce que** le dispositif de fixation (4) comprend des écrous (11) et des boulons (12) insérés dans des trous (13) en vis-à-vis positionnés dans les sections principales (10a) des saillies en forme de L (10).

6. Structure modulaire pour la construction de bâtiments selon l'une quelconque des revendications précédentes, **caractérisée en ce que** le deuxième élément mâle (8) et le deuxième élément femelle (9) du dispositif d'ancrage (3) comprennent des plans inclinés complémentaires et sont en contact entre eux.

7. Structure modulaire pour la construction de bâtiments selon l'une quelconque des revendications précédentes, **caractérisée en ce que** le système pour acheminer le fluide comprend une configuration de conduits tubulaires (18) formant une partie solidaire des panneaux métalliques (1).
